# EUROPÄISCHE PATENTSCHRIFT

(11) **EP 1 282 537 B1**
(45) Veröffentlichungstag und Bekanntmachung des Hinweises auf die Patenterteilung: **26.04.2006**
(21) Anmeldenummer: 01943005.7
(22) Anmeldetag: 03.05.2001
(51) Int. Cl.: B60J 10/00, F16B 5/12

(54) **BEFESTIGUNGSSYSTEM FÜR STRANGFÖRMIGE ELASTISCHE DICHTELEMENTE**
FIXING SYSTEM FOR CORD-LIKE ELASTIC SEALING ELEMENTS
SYSTEME DE FIXATION POUR ELEMENTS D'ETANCHEIFICATION ELASTIQUES SE PRESENTANT SOUS FORME DE CORDONS

(30) Priorität: 19.05.2000 DE 10024567
(43) Veröffentlichungstag der Anmeldung: 12.02.2003
(73) Patentinhaber: SG technologies GmbH, 66687 Wadern-Büschfeld (DE)
(72) Erfinder: SEHR, Ralf, 66697 Losheim (DE); PHILIPPI, Reimund, 66773 Schwalbach-Elm (DE); KAST, Christian, 66683 Merzig-Brotdorf (DE)
(86) Internationale Anmeldenummer: PCT/DE2001/001675
(87) Internationale Veröffentlichungsnummer: WO 2001/087657

(56) Entgegenhaltungen:
- EP-A- 0 618 101
- EP-A- 0 694 428
- DE-A- 19 730 942
- DE-C- 709 461
- US-A- 2 546 049
- US-A- 3 309 817
- US-A- 4 864 774
- US-A- 6 030 022

## Beschreibung

Die Erfindung betrifft ein Verfahren entsprechend den Merkmalen des Oberbegriffs von Anspruch 1 sowie ein Befestigungssytem zur Verwendung bei vorgenanntem Verfahren entsprechend den Merkmalen des Oberbegriffs von Anspruch 5, wie z.B. aus US-A-3 309 817 bekannt ist.

Bei der Befestigung elastischer Elemente, z.B. von Dichtelementen, an außenhautartigen 3d-Formteilen von Fahrzeugen bereiten die räumlichen Krümmungen der dünnwandigen Bleche die als Träger dienen erhebliche Probleme. Dies sowohl im Hinblick auf die Reproduzierbarkeit der Anbringungsgenauigkeit des Verlaufs am Träger als auch bezüglich der Dichtqualität an sich. Zur Abdichtung, Abdämpfung, Spaltenfüllung oder vergleichbarer Zwecke ist eine gute Dichtqualität jedoch Voraussetzung. Die Dichtqualität betreffend wurde dies mit bekannten Verfahren der Klebetechnik erreicht, worunter jedoch die Reproduzierbarkeit des Verlaufs der Anbringung am Träger gelitten hat und Auswirkungen auf das Design waren zusätzliche negative Folgen. Die Qualität der Anbringung ist daher ein Gütesiegel des Montageverfahrens mit allen bekannten Nachteilen der Klebeverfahren, insbesondere in der Serienproduktion.

Ohne Verwendung von Klebetechniken sind grundsätzlich zwei mechanische Befestigungssysteme und die dazugehörigen Verfahren bekannt, die Clip-Montage und die Clipleisten-Montage.

Nach dem Verfahren einer Clip-Montage vorgenommene Befestigungen sind dadurch gekennzeichnet, dass das zu befestigende elastische Element mittels einem oder mehreren Clips befestigt wird, wobei die Clips in der Regel vorgegebene Abstände von einander aufweisen. Für den Anwendungsfall, dass das elastische Dichtelement als Hohlkammerprofil ausgebildet ist, ist der Clip das die Befestigung bewirkende Befestigungselement. Als besonders nachteilig ist jedoch anzusehen, dass zwischen den einzelnen Befestigungspunkten der Clips kein ausreichender Anpressdruck zwischen Dichtelement und Träger aufgebaut wird - auch nicht bei relativ dicht gesetzten Befestigungsstellen - und damit auch keine ausreichende Konturanpassung an starken Krümmungen entsprechend der Karosseriekontur erreichbar ist.

Von der Funktion her ist weiterhin zu befürchten, dass je nach Belastungsart ein Abkippen des Dichtelementes aus seiner vorgesehenen Funktionszone erfolgen kann.

Aus der DE 195 00 231 A1 ist ein Plastic-Clip zur Blindbefestigung von Hohlkammerprofilen aus elastischem Werkstoff auf einem dünnwandigen Träger bekannt sowie ein Verfahren zur Vormontage der Clips an einem Hohlkammerprofil. Dabei besteht der Plastic-Clip aus einem Führungsschaft, an dessen einem Ende entgegengesetzt zueinander und in etwa rechtwinklig zum Führungsschaft abstehende Haltelaschen angeordnet sind, und zwei - vom Führungsschaft v-förmig in Richtung der Haltelasche zeigend - Klemmstegen, wobei der Führungsschaft als dünne Platte mit parallelen Seitenflächen ausgebildet ist, dass die Haltelaschen über-von den Seitenflächen v-förmig abstehende - Spreizstege einerseits und die Klemmstege andererseits zur Längsachse des Führungsschaftes jeweils punktsymmetrisch angeordnet sind.

Aus der EP 0 526 782 A1 ist ein Plastic-Clip zur Blindbefestigung von weichelastischen Flachkörpern auf Tägerplatten bekannt mit zwei durch ein Befestigungsloch der Dichtungsmatte hindurchsteckbaren Spreizfingern und an diesen rechtwinklig und biegesteif angeformte Schafthälften, welche im Anlieferungszustand noch nach außen abstehen und an den sich gegenüberliegenden Knickkanten über einen flexiblen Steg schwenkbar miteinander verbunden sind.

Im Falle einer Clipleisten-Montage wird das zu befestigende elastische Element mit einer Clipleiste am Träger, z. B. einem Fahrzeugteil, befestigt, wobei die Clipleiste aus mehreren Clips besteht, welche mittels einer Verbindungsleiste verbunden sind. Clips und Verbindungsleiste bilden so eine stoffliche Einheit, die Clipleiste, die unter Umständen dem Konturverlauf des Trägers angepasst ist oder angepasst werden könnte.

Auf diese Weise wird der Verfahrensvorteil angestrebt, dass ein durchgängiges Anliegen an den Träger erreicht wird, wozu eine Konturgebung des elastischen Elements mittels der Clipleiste beitrüge.

Eine vorteilhafte Ausbildung des Befestigungssystem in vorgenannter Art bleibt jedoch nicht ohne nachteilige Auswirkungen auf das Montageverfahren für Hohlkammerprofile, da durch die Bauhöhe der Clipleiste eine Vormontage im Hohlkammerprofil nur schwer möglich ist, wenn nicht gar ausgeschlossen. Die Folge ist, dass eine wirtschaftliche Vormontage von Clipleiste und Hohlkammerprofil nur dann gegeben ist, wenn zusätzlich zur Hohlkammer ein weiterer von außen freizugänglicher Auflagebereich für die Clipleiste vorgesehen ist. Auch die Gefahr einer Abkippung des Dichtelementes aus seiner Wirkungszone ist weiterhin gegeben.

Aus der DE 196 52 459 A1 ist eine Halteleiste für eine Dichtung, insbesondere einer Applikationsanlage für Kfz-Türen bekannt, welche zum Halten und Positionieren einer Dichtung verwendet wird, wobei die Halteleiste Einrichtungen zum Befestigen, insbesondere an beweglichen Konturteilen der Applikationsanlage, und von den Einrichtungen ausgehende Federzungen zum Anschluß der Dichtungen aufweist. Eine einfach herstellbare Halteleiste besteht dabei aus einem durchgehenden, in der Draufsicht mäanderförmigen Band aus Kunststoffmaterial, wobei das Band federnde, im wesentlichen quer zur Längserstreckung der Halteleiste verlaufende Schenkel sowie benachbarte Schenkel verbindende Stege bildet. Hierbei sind die Einrichtungen zum Befestigen an den Stegen auf der einen Seite der Halteleiste angeordnet, während die Federzungen von den Schenkeln sowie den Stegen der anderen Seite der Halteleiste gebildet sind. Die Einrichtungen zum Befestigen sind als Bohrungen ausgebildet und das Band besteht aus Polyoxymethylen (POM).

Die US 3,309,817 beschreibt Dichtungsstreifen aus Gummimaterial, die an metallischen Türöffnungen, wie beispielsweise Autotüren, verwendet werden. Der Dichtungsstreifen wird hierbei mittels eines nicht- metallischen Trägerteiles und mittels Befestigungsteilen an der Automobilkarosserie befestigt. In dem Fuß des Dichtungsstreifens ist in Längsachse ein Hohlraum ausgebildet, der das Trägerteil aufnimmt und der im eingebauten Zustand von dem Trägerteil an die Automobilkarosserie geklemmt wird.
Die Herstellung eines zusätzlichen Hohlraumes zur Aufnahme des Trägerteiles ist technisch aufwendig. Der Dichtungsstreifen benötigt neben dem Dichtungsbereich, der die eigentliche Funktion der Dichtung übernimmt, einen zusätzlichen Befestigungsbereich. Dadurch ist das von dem Dichtungsstreifen beanspruchte Volumen groß. Auch ist hier die Gefahr einer Abkippung des Dichtungsstreifens aus seiner Funktionszone aufgrund des großen Abstandes des Dichtbereiches von der Automobilkarosserie gegeben.

Aufgabe der Erfindung ist es deshalb, bekannte Befestigungssysteme mit den genannten Nachteilen so zu verbessern, dass ein wirtschaftliches, montagefreundliches mechanisches Befestigen gummielastischer Dichtelemente, insbesondere strangförmiger Hohlkammerprofile, die je nach Kompliziertheit der 3d-Kontur ggf. auch abschnittsweise mit Formteilen zu ergänzen sind, an dünnwandigen Trägern, z. B. Karosserieblechen, Rahmen, Zargen, Türen oder sonstigen außenhautartigen 3d-Konturen, zu ermöglichen. Dies unter der Voraussetzung, ohne jegliches auch nicht ergänzendes Sicherheitskleben, wobei eine hohe Dichtqualität bei hoher Reproduzierbarkeit der Genauigkeit des Anbringens gewährleistet sein soll.

Die Aufgabe wird gelöst nach einem Montageverfahren mit den Merkmalen des Anspruchs 1 sowie einem zugehörigen Befestigungssystem mit den Merkmalen des Anspruchs 5.

Die abhängigen Unteransprüche beziehen sich auf spezielle Verfahrensschritte und Ausführungsformen des Befestigungssystems.

Das erfindungsgemäße Befestigungssystem gestattet von der Vorrichtung her, ein Verfahren zur Montage von Hohlkammerprofilen an dünnwandigen Blechen ohne Verwendung von Klebstoffen. Es ermöglicht eine rein mechanische Befestigung - Verklemmung - von Dicht-, Abdämpfungs- und Spaltfüllprofilen an Fahrzeugen oder sonstigen außenhautartigen 3d-Kontur aufweisenden Trägern.
Selbst kleine Abstandsdifferenzen bei Lochungen im Träger oder/und im Dichtelement oder der Klemmleiste können dabei durch die Verwendung eines gummielastischen Dichtelementwerkstoff ausgeglichen werden.

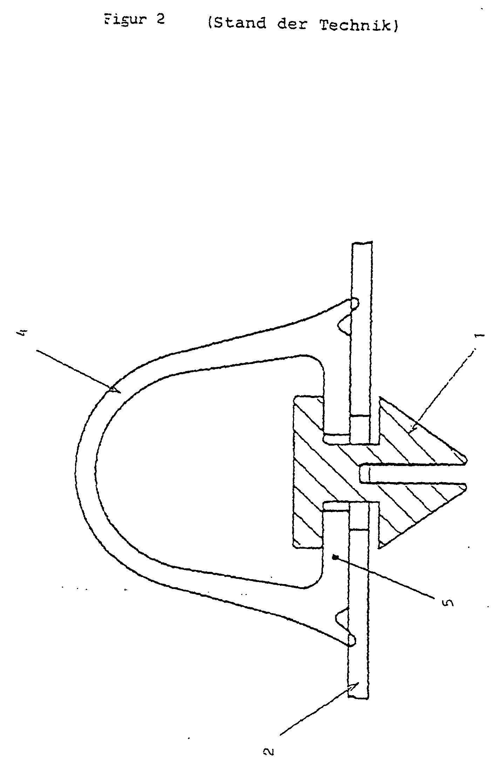

Figur 2 zeigt ein befestigtes Dichtelement in der Ausführung als Hohlkammerprofil, bei welchem der Befestigungsclip im Befestigungszustand dem Betrachter des Dichtelementes verborgen bleibt. Nachteilig ist jedoch, dass Konturanpassung und Anpressdruck über die Länge des Dichtelementes bzw. den Abdichtweg sehr ungleichmäßig bleibt. Ein Lösen der Befestigung ist nur mit einer Zerstörung des Clips oder des Dichtelementes möglich. Bei Verlust des Cliprestes gelangt dieser in Hohlräume was zu späteren unangenehmen Fahrgeräuschen führen kann.

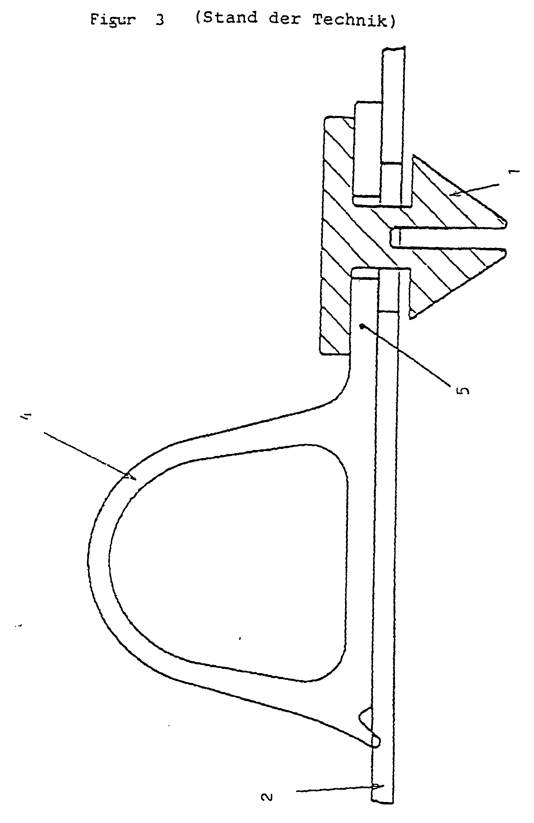

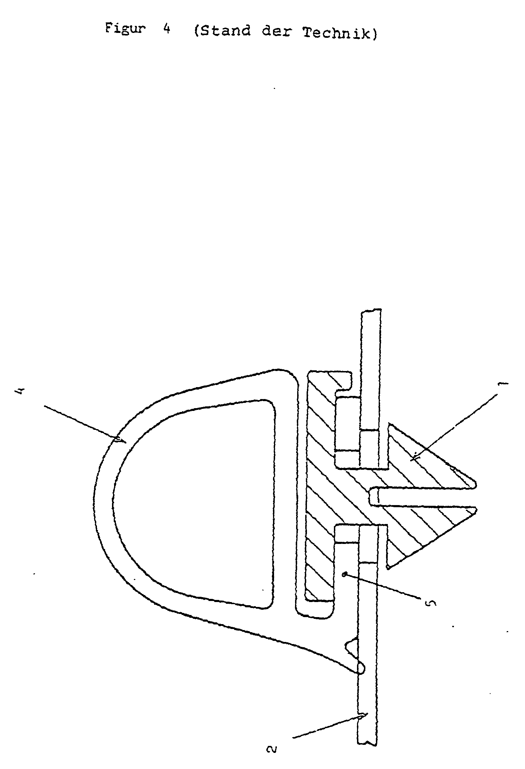

Figur 3 und 4 zeigen ebenfalls ein hohlkammerartiges, strangförmiges Dichtelement bei denen die Befestigung ohne ein Eindringen des Befestigungselementes in die Hohlkammer erfolgt. Einige Nachteilie sind bei dieser Befestigungsart vermieden, andere wie z. B. die Instabilität der Dichtzone sind erheblich.
Beide sind auch ein Beispiel für das Clipleistensystem. Es bezieht sich in den Figuren darauf, dass das elastische Element mittels einer Clipleiste am Träger befestigt wird. Die Schnittbilddarstellung legt den Clipleistenverlauf nicht dar.

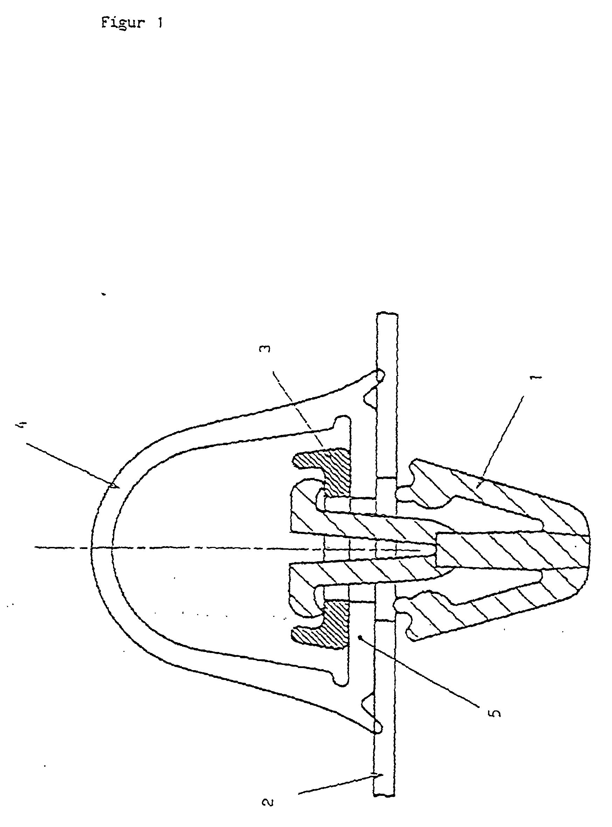

Figur 1 zeigt ein erfindungsgemäßes Ausführungsbeispiel im Einbauzustand. Dabei wird vorteilhafterweise das elastische Dichtelement 4 mittels einer Lochleiste 3 als Klemmleiste und einem aus der DE 195 00 231 A1 bekannten Plastic-Clip 1 als befestigendes Fügeelement verwandt. Die nur im Schnitt ersichtliche Klemmleiste 3 dabei dem Konturverlauf der Karosse angepasst ausgeführt und liegt auf der dem Träger 2 abgewandten Seite des Klemmsteges 5 auf.
Auf diese Weise ist ein durchgängiges Anliegen des Dichtelementes 4 am Träger 2 möglich, wobei der einstückige Clip 1 als befestigendes Fügeelement des Befestigungssystems als Einzelteil vorliegt und nicht in eine einstückige Clipleiste stofflich integriert ist.
Dem Design wird vorteilhaft dadurch entsprochen, dass einem Betrachter des Fahrzeuges bei eingebautem Zustand des Dichtelementes, das Befestigungssytem - wie bei Figur 2 - nicht ersichtlich ist.

Clipausführungen wie in den Figuren 2,3 und 4 können dabei durchaus auch in einem erfindungsgemäßen Befestigungssystem verwandt werden und nach dem erfindungsgemäßen Verfahren montiert werden, wenn eine ausreichende Anpressung zwischen den Spreizstegen der Clips und dem Träger aufgebaut werden kann.

### Bezugszeichenliste

- 1: Clip
- 2: Träger, beispielsweise Karosserieblech
- 3: Klemmleiste, beispielsweise Lochleiste
- 4: Dichtelement, beispielsweise Hohlkammerprofil
- 5: Klemmsteg des Dichtelementes

## Patentansprüche

1. Verfahren zum Befestigen eines gummielastischen, hohlkammerartigen Dichtelementes (4) an einem dünnwandigen Träger (2) mit 3d-Kontur entlang eines definierten Klemmweges, wobei Träger und Dichtelement in vorgegebenen Abständen Löcher aufweisen und die Befestigung mittels Clips (1) erfolgt, die Spreizstege aufweisen und jeweils in ein Loch des Trägers und ein diesem zugeordnetes Loch des Dichtelementes eingesteckt werden,
**dadurch gekennzeichnet,**
**dass** vor dem Befestigen des Dichtelementes (4) am Träger (2) in das Innere des Hohlkammerprofils des Dichtelementes (4) auf die dem Träger (2) abgewandte Fläche des Klemmsteges (5) des Dichtelementes (4) eine ebenfalls mit Löchern versehene Klemmleiste (3) aufgebracht wird, wobei zur Befestigung dann jeder Clip (1) zusätzlich das zugeordnete Loch in der Klemmleiste (3) durchdringt und die Klemmleiste (3) durch Ausrasten der Spreizstege in den Klemmverbund einbezogen wird.

2. Verfahren nach Anspruch 1,
**dadurch gekennzeichnet,**
**dass** die Klemmleiste (3) mehrstückig ausgebildet wird und jedes Teilstück mindestens zwei Löcher aufweist.

3. Verfahren nach den Ansprüchen 1 oder 2,
**dadurch gekennzeichnet,**
**dass** die Klemmleiste (3) vor der Montage an die jeweils vorhandene 3d-Kontur des ihr zugeordneten Befestigungsabschnittes angepasst wird.

4. Verfahren nach einem der Ansprüche 1 bis 3,
**dadurch gekennzeichnet,**
**dass** die Klemmleiste (3) mehrstückig ausgebildet wird, wobei jedes Teilstück bereits vor der Montage an die jeweilige 3d-Kontur des ihm zugeordneten Befestigungsabschnittes angepasst ist.

5. Befestigungssystem zum Verklemmen gummielastischer, hohlkammerartiger Dichtelemente (4) an einem dünnwandigen Träger (2) mit 3d-Kontur, wobei Träger und Dichtelement in vorgegebenen Abständen Löcher aufweisen, durch welche jeweils mit Spreizstegen versehene Clips (1) zur Befestigung einsteckbar sind,
**dadurch gekennzeichnet,**
**dass** im Inneren des Hohlkammerprofils des Dichtelementes (4) auf der dem Träger (2) abgewandten Seite des Klemmsteges (5) des Dichtungselementes (4) als Widerlager für die Spreizstege der Clips (1) eine Löcher aufweisende Klemmleiste (3) angeordnet ist.

6. Befestigungssystem nach Anspruch 5,
**dadurch gekennzeichnet,**
**dass** die Klemmleiste (3) aus aneinanderreihbaren Teilstücken besteht, die jeweils wenigstens zwei Löcher aufweisen.

7. Befestigungssystem nach einem der Ansprüche 5 bis 6,
**dadurch gekennzeichnet,**
**dass** die Klemmleiste (3) oder Teilstücke davon an die jeweilige 3d-Kontur der zugeordneten Befestigungsabschnitte angepasst sind.

## Claims

1. Method of fastening a rubber-elastic, cavity-like sealing element (4) to a thin-wall carrier (2) with three-dimensional profile along a defined clamping path, wherein carrier and sealing element have holes at predetermined spacings and the fastening is effected by means of clips (1), which have spreading webs and which are each plugged into a respective hole of the carrier and a hole of the sealing element associated therewith, **characterised in that** prior to fastening the sealing element (4) to the carrier (2) a clamping strip (3) similarly provided with holes is introduced into the interior of the cavity profile of the sealing element (4) on the surface of the clamping web (5) remote from the carrier (2), wherein each clip (1) then for fastening additionally penetrates the associated hole in the clamping strip (3) and the clamping strip (3) is incorporated in the clamping unit by detenting the spreading webs.

2. Method according to claim 1, **characterised in that** the clamping strip (3) is of multi-part construction and each part member has at least two holes.

3. Method according to claim 1 or 2, **characterised in that** the clamping strip (3) prior to mounting is adapted to the respectively present three-dimensional profile of the fastening section associated therewith.

4. Method according to one of claims 1 to 3, **characterised in that** the clamping strip (3) is of multi-part construction, wherein each part member prior to mounting is already adapted to the respective three-dimensional profile of the fastening section associated therewith.

5. Fastening system for clamping rubber-elastic, cavity-like sealing elements (4) to a thin-wall carrier (2) with three-dimensional profile, wherein carrier and sealing element have holes at predetermined spacings, wherein clips (1) provided with spreading webs can be inserted through the holes for fastening, **characterised in that** a clamping strip (3) having holes is arranged in the interior of the cavity profile of the sealing element (4) on the side, which is remote from the carrier (2) of the clamping web (5) of the sealing element (4) as counter-bearing for the spreading webs of the clips (1).

6. Fastening system according to claim 5, **characterised in that** the clamping strip (3) consists of part members which can be lined up in a row and which each have at least two holes.

7. Fastening system according to one of claims 5 and 6, **characterised in that** the clamping strip (3) or part members thereof are adapted to the respective three-dimensional profile of the associated fastening sections.

## Revendications

1. Procédé de fixation d'un élément d'étanchéité élastique en forme de chambre creuse (4) à un support (2) à paroi mince d'un contour 3d le long d'un chemin de serrage défini, où le support et l'élément d'étanchéité présentent à des écarts définis des trous et la fixation a lieu par des clips (1), qui présentent des branches d'écartement et peuvent être enfoncés à chaque fois dans un trou du support et un trou associé à celui-ci de l'élément d'étanchéité, **caractérisé,**
**en ce qu'**avant la fixation de l'élément d'étanchéité (4) au support (2), on applique à l'intérieur du profil en chambre creuse de l'élément d'étanchéité (4) sur la face éloignée du support (2) de la baguette de serrage (5) de l'élément d'étanchéité (4), une baguette de serrage (3) également munie de trous, où pour la fixation, chaque clip (1) passe additionnellement à travers le trou associé dans la baguette de serrage (3), et la baguette de serrage (3), par le déclenchement des branches d'écartement, est rentrée dans la combinaison de serrage.

2. Procédé selon la revendication 1, **caractérisé en ce que** la baguette de serrage (3) est réalisée en plusieurs pièces et que chaque pièce partielle présente au moins deux trous.

3. Procédé selon les revendications 1 ou 2, **caractérisé en ce que** la baguette de serrage (3), avant le montage, est adaptée au contour 3d respectivement présent de la section de fixation associée à celle-ci.

4. Procédé selon l'une des revendications 1 à 3, **caractérisé en ce que** la baguette de serrage (3) est réalisée en plusieurs pièces, où chaque pièce partielle, déjà avant le montage, est adaptée au contour 3d respectif de la section de fixation associée à celle-ci.

5. Système de fixation pour le serrage d'éléments d'étanchéité élastiques en forme de chambre creuse (4) à un support à paroi mince (2) à contour 3d, où le support et l'élément d'étanchéité présentent des trous à des écarts prédéfinis, à travers lesquels peuvent être enfoncés des clips (1) respectivement pourvus de branches d'écartement pour la fixation, **caractérisé en ce qu'**une baguette de serrage (3) présentant des trous est disposée dans l'intérieur du profil de chambre creuse de l'élément d'étanchéité (4) sur le côté, éloigné du support (2), de la baguette de serrage (5) de l'élément d'étanchéité (4) comme butée pour les branches d'écartement des clips (1).

6. Système de fixation selon la revendication 5, **caractérisé en ce que** la baguette de serrage (3) est constituée de pièces partielles aptes à être juxtaposées qui présentent chacune au moins deux trous.

7. Système de fixation selon l'une des revendications 5 et 6, **caractérisé en ce que** la baguette de serrage (3) ou des pièces partielles de celle-ci sont adaptées au contour 3d respectif des sections de fixation associées.
